# EUROPEAN PATENT SPECIFICATION

(11) **EP 0 365 600 B1**
(45) Date of publication and mention of the grant of the patent: **13.03.1996**
(21) Application number: 88906806.0
(22) Date of filing: 24.06.1988
(51) Int. Cl.: F03B 13/12

(54) **MACRO-ENGINEERING PROCESS FOR ALL-WEATHER AT-SEA WIND- AND WAVE-ENERGY EXTRACTION**
GROSSTECHNISCHER PROZESS ZUR WIND- UND WELLENENERGIEGEWINNUNG AUF SEE BEI JEDEM WETTER
PROCEDE DE MACRO-INGENIERIE PERMETTANT L'EXTRACTION D'ENERGIE DU VENT ET DE VAGUE EN HAUTE MER EN TOUS TEMPS

(30) Priority: 26.06.1987 US 66436
(43) Date of publication of application: 02.05.1990
(73) Proprietor: SCHREMP, Edward, Jay, Alexandria, VA 22314 (US)
(72) Inventor: SCHREMP, Edward, Jay, Alexandria, VA 22314 (US)
(74) Representative: Rost, Jürgen
(86) International application number: US8802136
(87) International publication number: WO8810368

(56) References cited:
- FR-A- 2 501 795
- US-A- 1 835 018
- US-A- 3 988 592
- US-A- 4 092 828
- US-A- 4 266 403
- US-A- 4 279 124
- US-A- 4 292 540
- US-A- 4 447 740
- US-A- 4 495 424

## Description

This invention was described in a Disclosure Document filed at the United States Patent and Trademark Office on June 26, 1985. This Document is to be incorporated by reference herein.

Reference is also made to my prior U.S. Patent No. 4,279,124 which issued on July 21, 1981.

This application is a continuation of U.S. Patent Application Serial No. 066,436 which was filed on June 26, 1987.

It describes a system for extracting subsurface wave energy comprising a submersible seagoing waveconverter, but does not teach to use a clustered plurality of such waveconverters to calm the high seas.

### BACKGROUND OF THE INVENTION

Broadly speaking, the technical field of the present invention is "Wind-Energy Extraction at Sea."

As a renewable source of usable energy which might, in principle, be tapped on an arbitrarily large scale, wind action at sea should obviously far surpass wind action over land. However, in terms of the relative progress made to date in exploiting wind action in these two alternative ways, the present state of the windmill art demonstrates only too clearly that, to all intents and purposes, wind action at sea has not yet been generally found to be technically accessible.

### OBJECTS AND SUMMARY OF THE PRESENT INVENTION

The primary object of the present invention is to teach how wind action at sea can actually be freed from this conventional presumption of technical inaccessibility, with the result that, for the first time, wind action can, in fact, be found to possess at sea a vast technical potential as a renewable source of usable energy ready for immediate exploitation on a massive scale and at a competitive cost.

In devising means for and methods of extracting energy in usable form from wind action within any given locality on the high seas, and under whatever weather conditions might prevail within that locality at any given time, it is always possible and main object of this invention to change those weather conditions locally for the better, especially by incorporating with the operation of extracting energy in usable form from wind action at and above the surface of the water within that locality an effective additional operation of simultaneously extracting independently coexisting energy arising from ambient wave action at and below the surface of the water within that same locality.

Thus, the occurrence of adverse effects of stormy conditions at sea can, in this way, be prevented locally to such a degree that the aforementioned conventional presumption of technical inaccessibility need no longer apply to wind action at sea, any more than to wind action over land.

In order, then, to achieve such virtually complete equalization between wind action at sea and wind action over land with respect to their relative degrees of technical accessibility, the essential feature of the just indicated means for and methods of extracting energy in usable form from wind action within any given locality on the high seas must lie in the utilization within that locality of an effective combination of two mutually synergistic operations: a wind energy extracting operation, and a wave energy extracting operation.

The objects of the invention are solved by a method according to claim 1 and a system according to claim 8. Advantageous embodiments of both method and system are given in the respective dependent claims.

While the nature of each of these two mutually synergistic operations may take any one of a practically infinite variety of forms, subject only to the limitation that it fall within the very broad scope of the inventive concept expressed above, it is nevertheless clear that, in any particular instance, the specific nature of each of the two aforesaid operations must ultimately be decided upon through a process of selection from among a possibly wide variety of competing options.

A combined utilization of energy from both wind and waves is disclosed in US-A-4 495 424 including a floating platform fixed to the bottom to which a plurality of wave energy converters and a wind energy converter are fixed. However, this known wind/wave power generating plan can only be utilized in rather close to land off shore areas. When exposed to stormy winds or hurricanes, the platform will stabalize making it impossible to use with known device with high effeciency under conditions which, however, would be most desirable in respect of a good energy yield.

It is the specific object of the present invention to provide a method, device and a system arrangement for a combined high efficiency wind/wave energy extraction in particular in open sea areas which typically are 50 kilometers or much more off shore.

A method of extracting wind/wave energy according to the invention is defined in claim 1 with an important improvement according to the teaching of claim 1 affording optimum shelter from stormy sea.

Further objects and features of the present invention will now be explained in relation with the accompanying drawings of which
Fig. 1 is a side elevation view of a typical sea-based vertical-axis wind turbine (VAWT) according to the present invention;
Fig. 1A is a view seen in the direction of the arrows at line 1A-1A in Fig. 1;
Fig. 2 is a partial side elevation view of a typical oversea-based VAWT as used with the present invention;
Fig. 3 is a fregmentary plan view schematically showing a wave energy extraction system according to US-A-4 279 124;

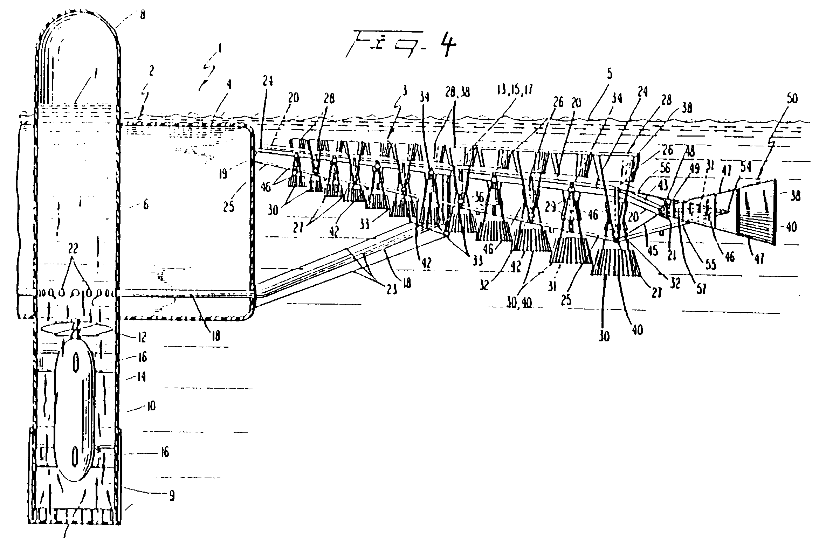

Fig. 4 is a side elevational view of the overall system, taken along the line 2-2 in Fig. 3; and
Fig. 5 is an oblique view of typical land-based vertical-axis wind turbine (VAWT) according to the prior art.

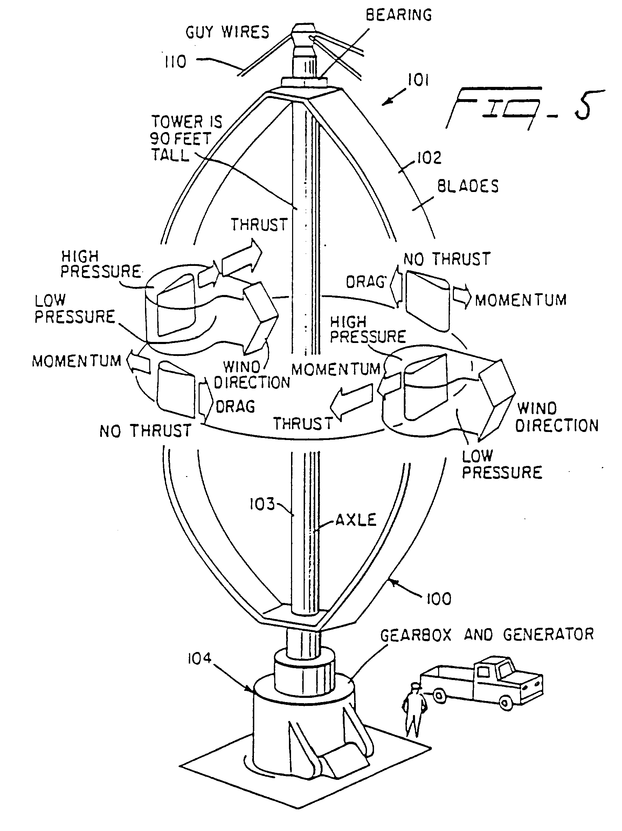

Here, for the purposes of illustration, only one embodiment of the present invention need be discussed in any detail. In this particular embodiment -- actually a highly preferred one, for reasons which will presently become evident -- the wind energy extracting operation would be performed by the so-called Inverted Eggbeater portion 101 of a vertical-axis wind turbine (or VAWT, for short) whose structural characteristics (excluding certain necessary modifications to be discussed below) are similar to those which are illustrated schematically in Fig. 5.

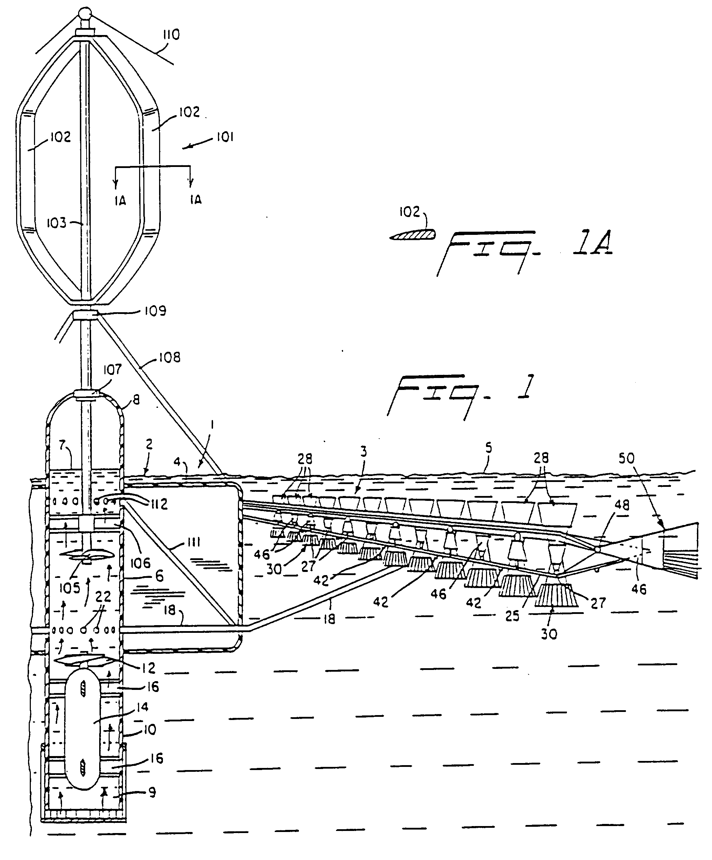

Again in this particular embodiment, the wave energy extracting operation would be performed by an annular array of submerged wave energy removing impellers 28, 30 and 50 mounted upon an annular outrigger 3 surrounding and secured to an inboard platform 2 -- the structural characteristics of these components of the presently contemplated overall seagoing wave energy extraction system 1 being similar to those which are illustrated schematically in Fig. 1.

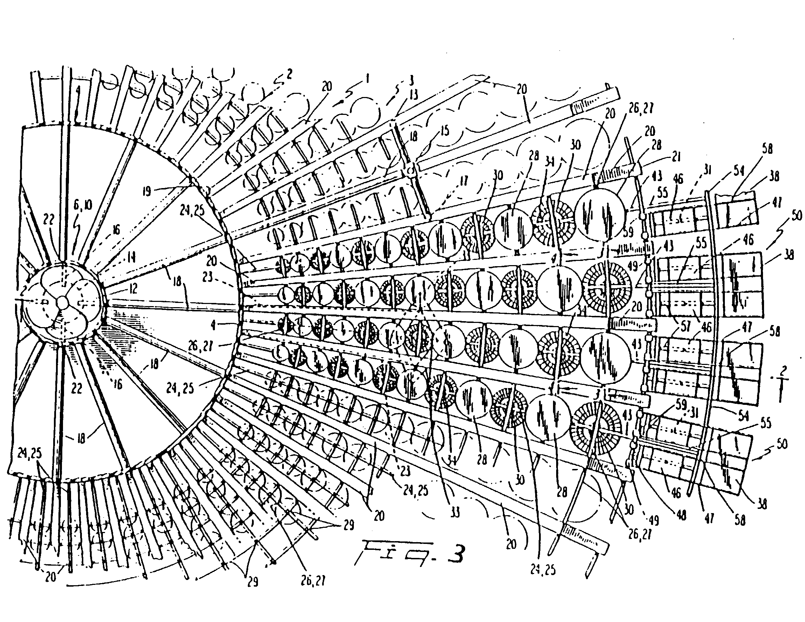

Upon inspection of Figure 1, it becomes immediately evident that a uniquely effective combination of wind energy and wave energy extracting operations can be achieved by positioning an Inverted Eggbeater 101 similar to that shown in Fig. 5 a suitable distance above an overall wave energy extraction system 1 similar to that shown in Fig. 3, in such a way that the vertical axis of rotation of the Inverted Eggbeater 101 coincides with the vertical axis of rotation of the central turbine 12 illustrated in Fig. 3.

More particularly, it becomes clear that this preferred embodiment of the present invention rids one of the need for the generator and gearbox 104 of the conventional land-based VAWT 100, as well as the need for the massive structure which is required in order to house them; for, whether or not an alternative power transmission mechanism might still be needed elsewhere in place of the gearbox 104, one's customary dependence upon the foregoing three familiar but no longer indispensable features of the land-based VAWT 100 can now be obviated by taking advantage of a feature already in being, so to speak, as an essential component of the overall wave energy extraction system 1 referred to above: namely, the pressure transmission subsystem by means of which extracted wave energy is conveyed from a multiplicity of pumps 46 to the central turbine 12, as is shown in Fig. 1.

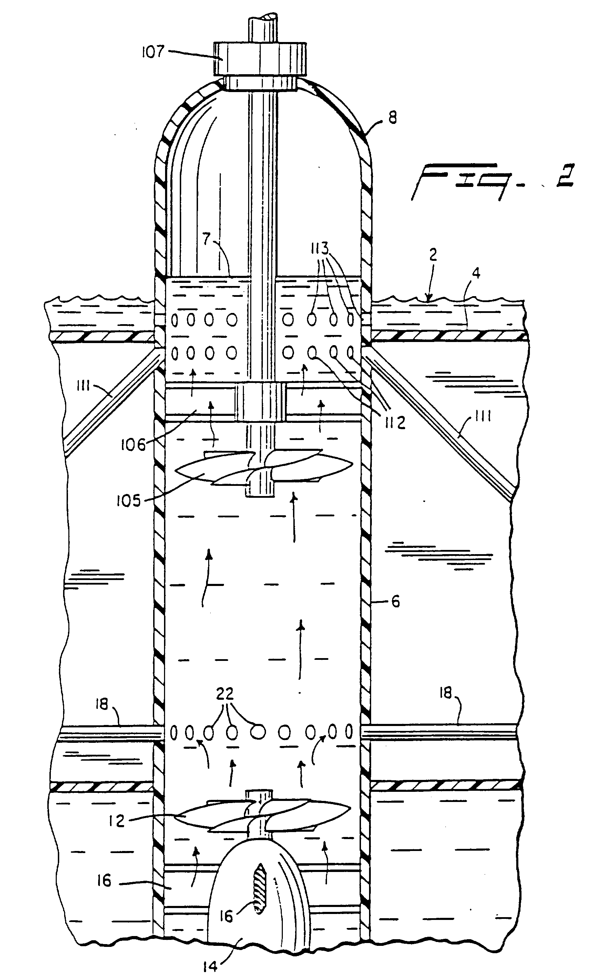

Thus, instead of terminating inside the massive basal structure which houses the generator and gearbox 104 of the conventional land-based VAWT 100, the axle 103 of the Inverted Eggbeater portion 101 of the VAWT can now simply be extended downward through the dome 8 of the interior chamber 6 portrayed in Fig. 1, until, at an appropriate level inside the chamber 6, below the water surface 7 but above the orifices 22 of the various conduits 18, the said axle 103 will come to an end, and (should there be no need, at this point, for an alternative power transmission mechanism) it will there perform the function of imparting its rotational motion to a rigidly attached, propeller-type, low-head runner 105 (see Fig. 2) similar to the runner of the central turbine 12 directly below it, and possessing the same vertical axis of rotation as the latter, although generally differing therefrom in its typical rotational speed, while possibly (if further analysis so dictates) also differing therefrom in its sense of rotation.

As will no doubt have already become apparent by now, this additional runner 105, rather than being used to generate electricity directly, as does the runner of the central turbine 12, would function instead as a wind energy converting pump operating in parallel with each and every wave energy converting pump 46. The manner in which this additional runner 105 would thus function as a pump, and thereby would contribute indirectly but effectively and efficiently to the overall electric power output of the central turbine 12, will presently be discussed in somewhat greater detail. Meanwhile, however, a few remarks should first be made, at this point, about the structural characteristics and wave stabilizing capabilities of this particular embodiment of the present invention.

It will be noted, to begin with, that the aforementioned additional runner 105, like the runner of the central turbine 12, would be mounted centrally within the chamber 6 by means of struts 106 similar to the struts 16. While thus providing support for the additional runner 105, these additional struts 106 would, in turn, be required to provide a major part of the total structural foundation for the Inverted Eggbeater 101, including the axle 103 thereof, as well as any additional power transmission mechanism that might have to be inserted (in contrast to what has been tentatively assumed above) between the said axle 103 and the additional runner 105.

A further contribution to the aforesaid total structural foundation for the Inverted Eggbeater 101 and its associated overall power transmission mechanism would be provided by a hermetically sealed thrust bearing 107 surrounding and supporting the said axle 103 where it passes through the dome 8 of the chamber 6; and a still further such contribution would be provided by exterior struts 108 -- each being secured at its upper end to a common second thrust bearing 109 surrounding and further supporting the said axle 103 at a point just below the wind energy extracting blades 102 of the Inverted Eggbeater 101, and being secured at its lower end to the top surface of the buoyant, generally doughnut-shaped exterior vessel 4 portrayed in Fig. 1.

Finally, the distal ends of the guy wires 110 indicated in Fig. 10 would be secured, at appropriate peripheral points, to the completely surrounding outboard platform or outrigger 3 shown in Fig. 1.

Now it will be seen from Fig. 5 that the wind energy extracting blades 102 of the Inverted Eggbeater 101 are shaped, in the case of the model chosen for illustration, rather like a regular hexagon, through two of whose opposite vertices the vertically oriented axle 103 of the Inverted Eggbeater 101 passes. Moreover, for such a model, the magnitude of the perimeter of this representative regular hexagon would be, typically, about 60m (200 feet).

In order, then, to support an Inverted Eggbeater 101 of this size in the manner that has just been described above, the aforementioned overall wave energy extraction system 1 must possess certain corresponding attributes, not the least important of which are the corresponding dimensions of the underlying inboard platform 2 and outrigger 3 referred to above. In this particular context, therefore, it would appear necessary that the radius of the supporting overall wave energy extraction system 1 -- as measured from the vertical axis of rotation of the central turbine 12 to the neutrally buoyant outermost impellers 50 (see Fig. 1) -- should be no less than 30m (100 feet).

The foregoing two approximate dimensions -- the 60m (200 foot) perimeter of the aforesaid representative regular hexagon, and the associated 30m (100 foot) radius of the overall wave energy extraction system 1 -- should then provide, for this particular embodiment of the present invention, just about the right basis for achieving both optimal relative size and optimal overall structural strength of the resulting combined wind energy and wave energy extracting subsystems thereof.

But to fulfill these two conditions is, of course, not yet enough to ensure that wind action at sea can actually be freed from (the) conventional presumption of technical inaccessibility -- which presumption, as has already been indicated at the outset of this specification, has hitherto constituted, in and of itself, not only the most severe but also the most far-reaching constraint upon current progress in developing a flourishing wind energy industry.

Given, then, the necessary conditions for optimal relative size and for optimal overall structural strength that have just been posited for the aforesaid combination of wind energy and wave energy extracting subsystems, what is still required is that the latter subsystem 1 possess a wave stabilizing capability that will provide for the former subsystem 101 a degree of shelter from the surrounding high seas sufficient to enable effective wind energy extraction to take place in the presence of any surrounding sea state within the usual range of sea states found, for example, off the Atlantic or Pacific coast of the United States.

It is, of course, well known that the usual range of sea states is found, in many instances, to vary appreciably from place to place on the high seas -- as in fact it does between the Atlantic and Pacific coasts of the United States. Consider, therefore, how the wave stabilizing capability of the foregoing particular embodiment of the present invention could be specially adapted to limited use, say, off the North Atlantic coast of the United States, where the average waves have heights between 1,5 and 4,5 m (5 and 15 feet), and wavelengths between 30 and 90m (100 and 300 feet).

In this specific case, the wave energy extracting subsystem 1 in question (shown schematically in Fig. 1) should include, around its entire periphery, that full complement of neutrally buoyant outermost impellers 50 which would be capable of coping¹ with ambient progressive sinusoidal surface waves traveling in arbitrary directions, and having wave heights of up to 4,5m (15 feet) and wavelengths of about 90 m (300 feet).
¹Here the phrase "capable of coping" is intended to mean "capable of performing resonant oscillatory motions -- of maximal acceptable limiting amplitude that is characteristic of the generally concentric ring of impellers 28, 30, or 50 in question -- in tuned omnidirectional response to the corresponding ambient progressive sinusoidal surface waves," it being further required that, within the generally concentric ring of impellers 28, 30, or 50 in question, the wave heights of the said corresponding ambient progressive sinusoidal surface waves are thereby reduced, through wave energy absorption by the said impellers 28, 30, or 50, to such a degree that effective wind energy extraction can simultaneously take place within the central region circumscribed and sheltered by the said impellers 20, 30, or 50. See footnote on page 9.

Next in the order of inward progression from its periphery, this wave energy extracting subsystem 1 should include an outermost pair of generally concentric rings of nonbuoyant impellers 30 which would be capable of coping¹ with ambient progressive sinusoidal surface waves traveling in arbitrary directions, and having wave heights of up to 4,5m (15 feet) and wavelengths of about 75 and 60m (250 and 200 feet), respectively.

Above these nonbuoyant impellers 30 and in the same order of inward progression, the wave energy extracting subsystem 1 should include an outermost pair of generally concentric rings of homologous buoyant impellers 28 which would be capable of coping¹ with ambient progressive sinusoidal surface waves traveling in arbitrary directions, and having wave heights of up to 4,5m (15 feet) and wavelengths of about 45 and 30m (150 and 100 feet), respectively.

Next, the wave energy extracting subsystem 1 should include an inner pair of generally concentric rings of nonbuoyant impellers 30 which would be capable of coping with ambient progressive sinusoidal surface waves traveling in arbitrary directions, and having wave heights of up to 4,5m (15 feet) and wavelengths of about 25 and 15m (75 and 50 feet), respectively.

Finally, the wave energy extracting subsystem 1 should include an innermost series of generally concentric rings of buoyant impellers 28 which would be capable of coping¹ with ambient progressive sinusoidal surface waves traveling in arbitrary directions, and having wave heights of up to 4,5 m (15 feet) and wavelengths of about 12, 9, 6, and 3m (40, 30, 20, and 10 feet), respectively.

As prescribed above, the entire annular array of impellers 28, 30, and 50 may be viewed as comprising two distinct parts: (i) an outer partial annular array including impellers 28, 30, and 50 which respond resonantly to waves of approximate wavelength 30, 45, 60, 75 and 90m (100, 150, 200, 250, and 300 feet), respectively; and (ii) an inner partial annular array including impellers 28 and 30 which respond resonantly to waves of approximate wavelength 3, 6, 9, 12, 15, and 25m (10, 20, 30, 40, 50, and 75 feet), respectively.

A special purpose of the outer part (i) of the aforesaid entire annular array of impellers 28, 30 and 50 is to cope¹ in an optimal fashion with the totality of "average waves" as defined above for the present specific case, and to do so by exploiting as fully as possible the individual resonance characteristics of all of its component impellers 28, 30 and 50 as a means of maximally amplifying the corresponding aggregate wave power incident upon every such component impeller, and thereby of achieving, overall, a very broad-band range of amplified response extending continuously throughout, and even somewhat beyond, the range of wave heights and wavelengths which characterize the aforesaid "average waves." Here, incidentally, any or all of the five above prescribed approximate wavelengths at which resonance occurs may be altered to some extent without affecting appreciably the aforesaid optimal overall performance of the outer part (i) of the entire annular array of impellers 28, 30 and 50.

While this outer partial array of impellers (i) will always extract at least a substantial fraction of the total incident wave energy content of the "average waves" as defined above, there will, nevertheless, almost always be present an accompanying but completely different component of the prevailing sea state whose incident wave energy content can be extracted only by the inner partial array of impellers (ii). An important distinction must therefore be drawn between the respective special functions of the outer part (i) and the inner part (ii) of the foregoing entire annular array of impellers 28, 30 and 50; and what that distinction is can perhaps best be clarified by considering, along the following lines, how varied over time the surrounding sea state can be.

Thus, it is only very occasionally that these widely varying sea states will assume the unmixed form, known as "swell," which is characterized by high, long waves that have already traveled, by distances that are sometimes immense, away from the area where they were originally wind-generated. As the distance from the generating area increases, this "swell" approximates more and more closely to the ideal form that has already been identified above as a "progressive sinusoidal surface wave traveling in an arbitrary direction" at a certain speed, and having a certain wave height and wavelength -- and that is accordingly suited to a mathematical analysis of, for example, the overall response characteristics of the outer part (i) of the foregoing entire annular array of impellers.

If, on the other hand, as is much more often the case, the entire annular array of impellers 28, 30 and 50 happens to be located in or near any region where waves are in the immediate process of being wind-generated, that entire annular array will then be surrounded by a far more complex sea state known simply as "sea" in general, but more particularly as "storm sea" when the generating winds are of unusually high velocity and/or unusually long duration. The resulting extremely complex pattern of the surrounding sea surface can then be adequately described only in terms of a spectrum that includes progressive sinusoidal wave trains of a great variety of wave heights and wavelengths, moving in various directions.

Still more likely to occur than either of the two previous limiting cases is one in which the sea state surrounding the entire annular array of impellers 28, 30 and 50 at any particular time will be some combination of "swell" and "sea"; and in every such instance the then current spectrum describing this overall sea state will now be composed of two essentially independent partial spectra: a "swell" subspectrum, most of whose incident wave energy content, being concentrated within a band of wavelengths ranging between 30 and 90m (100 and 300 feet), is subject to extraction primarily by the outer partial array of impellers (i), in the manner described; and a "sea" subspectrum, most of whose incident wave energy content, being concentrated within a band of wavelengths ranging between 3 and 20m (10 and 75 feet), is subject to extraction primarily by the inner partial array of impellers (ii), in a precisely similar manner.

Now this distinction between "swell" and "sea" subspectra is crucially important from the point of view of providing the foregoing particular embodiment of the present invention with a wave stabilizing capability adequate to the requirement set forth on pages 8 and 9 above: namely, that the wave energy extracting subsystem 1 of that embodiment shall be capable of providing for the wind energy extracting subsystem 101 thereof "a degree of shelter from the surrounding high seas sufficient to enable effective wind energy extraction to take place in the presence of any surrounding sea state within the usual range of sea states. . ."

Here, it should be pointed out that, in the interest of simplicity, the foregoing requirement, as set forth above, has been stated only in terms of "enabling effective wind energy extraction to take place" in the presence of potentially unfavorable ambient wave action, without addressing, for the time being, the analogous problem that arises in the presence of potentially unfavorable ambient wind action. This latter problem, which of course applies equally to wind action at sea and to wind action over land, will nevertheless be dealt with briefly below.

As for the former problem, the first necessary step towards its solution would be to call to mind that, "within the usual range of sea states, contemplated above, those sea states which involve any appreciable component of "sea" are of extremely common occurrence, while those which involve a "storm sea" component also occur -- though only infrequently, and then usually at low or moderate levels of intensity. The next such step would then be to observe that the corresponding overall "sea" subspectrum, unlike the associated "swell" subspectrum, can be potentially unfavorable to effective wind energy extraction, and must therefore be moderated at least to a degree "sufficient to enable effective wind energy extraction to take place."

The resulting moderating action upon the aforesaid overall "sea" subspectrum, effected through extraction of a substantial portion of its incident wave energy content by the inner partial array of impellers (ii), will then bring face to face with the inboard platform 2 -- and thereby with the aforementioned Inverted Eggbeater 101 which it supports -- nothing worse than an immediately surrounding, filtered sea state, free for the most part from the characteristic steepness, roughness, and violence of "sea," and having a gradualness, smoothness, and regularity that approximate the qualities of "swell" and thereby permit easy riding among the remaining, relatively longer wavelength waves.

Indeed, it is right here that, for the first time, the central inventive idea emerges as to precisely how "the occurrence of adverse effects of stormy conditions at sea can," as is asserted on page 2 above, "be prevented locally to such a degree that the aforementioned conventional presumption of technical inaccessibility need no longer apply to wind action at sea, any more than to wind action over land."

Furthermore, it is right here that, for the first time, a valid basis simultaneously emerges for bringing decisively to an end any and all remaining doubts that devices of the kind described in Fig. 2 -- when designed, for example, for the purpose of commercially harvesting the energy of ocean waves on a far vaster scale than is contemplated here -- can have the capability not only of converting wave energy with high efficiency in the presence of average sea states, but also of continuing to do so even in the stormiest of seas.

While such larger devices as those which have just been mentioned above would normally be designed to have a rated power output of about 50 megawatts, it would, on the other hand, be preferable for the rated power output of the foregoing particular embodiment of the present invention to be set, more or less arbitrarily, at about 5 megawatts in the aggregate, of which about 2 megawatts might be attributable to wind action alone, and the remaining 3 megawatts to wave action alone.

By adopting this latter choice, for example, it would be quite feasible technically, and quite advantageous economically, to exploit such 5 megawatt combined wind-wave energy converters by deploying them in clusters -- each comprising perhaps 100 of these smaller devices -- anywhere on the high seas that might be deemed commercially most profitable, and in such a manner that they, too, like the just mentioned 50 megawatt wave energy converters, would "have the capability not only of converting wave energy with high efficiency in the presence of average sea states, but also of continuing to do so even in the stormiest of seas."

Indeed, every such cluster would itself acquire this twofold capability if, for example, whenever it might experience or anticipate approaching storm conditions of extraordinary violence, a corresponding dedicated group of perhaps four of the aforesaid 50 megawatt wave energy converters were to proceed from their usual site of operations to the vicinity of the said cluster, under standing instructions that they so maneuver with respect to its position as to provide it with the greatest possible degree of shelter from "storm sea."

Now the said cluster, when located in the deep waters of the open ocean, in the presence of a rising "storm sea," will be surrounded by waves whose height, speed, and wavelength will ultimately be limited only by the velocity of the wind. However, even in the very infrequent case of a great storm of long continuance, the waves finally formed under these conditions will be, surprisingly, less steep than those in a moderate gale; for, whereas the final heights of these waves will be directly proportional to the steadily prevailing wind speed, their final wavelengths will be proportional to the square of the latter, so that the steepness of the final waves will diminish in inverse proportion to the violence of the storm, as indicated on the Beaufort scale of wind speed.

If, then, throughout such a storm of rare violence and duration, the aforesaid four 50 megawatt waveconverters were to be suitably deployed on the windward side of the said cluster, the resulting moderating action upon the "storm sea" would, in effect, "bring face to face" with each of that cluster's 100 individual Inverted Eggbeaters 101 "nothing worse than an immediately surrounding, filtered sea state . . . having a gradualness, smoothness, and regularity that approximate the qualities of 'swell' and thereby permit easy riding among the remaining, relatively longer wavelength waves."

While the foregoing moderating action upon the "storm sea" will have thus been effected through extraction of a portion of its total incident wave energy content by the combined overall arrays of all impellers 28, 30 and 50 -- not only of the four 50 megawatt waveconverters, but also of the 100 smaller wind-waveconverters which comprise the said cluster itself -- what is crucially important in the present context is not the quantity, but rather the quality, of wave energy which will have thus been extracted.

Thus, in this very rare context, and yet in very close analogy with the corresponding usual treatment, indicated on pages 11 and 12 above, of "average waves" as previously defined for the present specific case, the partial spectrum of the "storm sea" component -- which now, in fact, would be practically the totality -- of the overall surrounding sea state may now be regarded as comprising, in its turn, two essentially independent partial subspectra: (i) a relatively long wavelength, "swell-generating" subspectrum, whose tremendous incident wave energy content, being distributed over a very broad band of long wavelengths ranging from 180 to 600m (600 to 2,000 feet) or more, is subject to no appreciable extraction by the aforesaid combined overall arrays of all impellers 28, 30, and 50 except at the relatively shorter wavelengths within this long wavelength band; and (ii) a relatively short wavelength "sea" subspectrum, whose relatively smaller, but still considerable, incident wave energy content, being concentrated within a band of wavelengths ranging from 3 to 180 m (10 to 600 feet), is subject to maximal acceptable¹ extraction by the aforesaid combined overall arrays of all impellers 28, 30, and 50.

Accordingly, it is almost entirely the just defined "sea" subspectrum (ii), and hardly at all the just defined "swell-generating" subspectrum (i), which would undergo, as above, the substantial degree of attenuation necessary in order that the said cluster's 100 individual Inverted Eggbeaters 101 might become sufficiently "free . . . from the characteristic steepness, roughness, and violence" of the surrounding unfiltered "sea" subspectrum (ii) to enable them, in turn, to "ride easily" under the virtually exclusive, far gentler influence of the more immediately surrounding filtered "swell-generating" subspectrum (i).

However, for the said cluster's 100 individual Inverted Eggbeaters 101 to be thus enabled to "ride easily" in the stormiest of seas is, of course, only the first necessary step towards a complete solution to the twofold problem, stated explicitly on pages 14 and 15 above, that arises in the combined presence of potentially unfavorable ambient wave and wind action. Indeed, as was there pointed out, the second of these two problems -- which has not yet been, but will now be, addressed -- "applies equally to wind action at sea and to wind action over land." And the question as to whether or not there might exist a solution to the latter problem still remains an unanswered question which likewise "applies equally to wind action at sea and to wind action over land." Even so, when compared under equally adverse weather conditions involving ambient winds of equal speed and duration, the options that are available for coping with potentially damaging wind action are distinctly better at sea than over land.

If, in contrast with the aforesaid seagoing cluster of 100 individual Inverted Eggbeaters 101, one were to consider, for example, a windfarm on land comprising 100 wind energy generators of any type but of comparable dimensions, one would first of all have to note that a certain type of incomparability must necessarily subsist between the sea-based windfarm and the land-based windfarm, arising from the extremely wide divergence between their respective overall rated power outputs. For, whereas the overall rated power output of the presently contemplated sea-based windfarm would be about 500 megawatts, that of the land-based windfarm would probably be no more than about 20 megawatts.

This divergence between the respective rated power outputs of the aforesaid sea-based and land-based windfarms would result, in the first place, from the fact that 300 of the 500 megawatts of overall rated power output of the sea-based windfarm would be attributable to wave action, and, in the second place, from the fact that the remaining 200 of the said 500 megawatts would reflect an inherent difference in performance characteristics between the individual sea-based Inverted Eggbeaters 101 and the individual land-based wind energy generators -- this latter difference being tantamount, in fact, to a tenfold advantage of the former over the latter, due primarily to the circumstance that, over land, the most favorable wind fields are at high altitudes and consequently for the most part technically inaccessible, whereas, at sea, the most favorable wind fields extend all the way down to the ocean surface itself.

Despite this extreme divergence between their respective overall rated power outputs, the aforesaid sea-based and land-based windfarms may nevertheless be further compared with one another to good purpose; and, to this end, one might therefore consider the possibility of integrating both windfarms, as electricity producing systems, with the transmission and distribution system of a major electric utility located at approximately the same distance, say 160 km (100 miles), from each windfarm.

At this point, it should perhaps be remarked that, for electric utility companies located anywhere along the Atlantic and Pacific coasts of the United States and Canada, the use of modular 500-megawatt sea-based windfarms, in the manner that is here under discussion, could provide an entirely new way in which to respond to future growth in the demand for electricity -- a way which, more than any other, would tend to reduce the unit cost of electricity.

Furthermore, unlike any other electricity producing system yet in the offing, the presently contemplated 500-megawatt sea-based windfarm typifies what would become the modular "building block" of a brand-new commercial electric generating technology whose scale -- and cost effectiveness -- could increase almost indefinitely in response to increasing growth in the demand for electricity, without encountering environmental constraints (such as those which coal power and nuclear power entail), or constraints due to depletion (as with oil and gas resources), or constraints of a geographical nature (as with OTEC at sea and with land-based wind energy systems).

Just as there are ways of obtaining a larger fractional coverage of electricity demand by wind energy alone, whether through storage facilities or through enlarged surplus capacity, so, too, can one obtain a still larger fractional coverage by wind and wave energy combined. In the latter case, in fact, there exist fresh options that are simply not available in the former case, and that would afford corresponding new opportunities to reduce even further the unit cost of electricity.

Thus, in the former case, a typical example might involve 100 wind energy generators of fixed frequency, each of which would start at a wind speed of about 11 miles per hour and would cut out at a wind speed of about 33 miles per hour, at which point it would have reached its rated power output of, say, 200 kilowatts. At wind speeds below 11 miles per hour and above 33 miles per hour, all 100 wind energy generators would accordingly be at a standstill.

In the latter case, on the other hand, each of the 100 component Inverted Eggbeaters 101 of the aforesaid 500-megawatt sea-based windfarm would be set free from any upper or lower limit of ambient wind speed of the kind that would necessarily be imposed, were it to be directly connected, as in the former case, to an electric generator of fixed frequency and of a given maximum power rating.

Above, in fact, a preliminary sketch has already been given of the manner in which every such Inverted Eggbeater 101 would be supported on its particular inboard platform 2 so as to be best fitted for the far more satisfactory alternative purpose of driving a corresponding wind energy converting pump, in the form of a second runner 105 (additional to, but mechanically isolated from, the runner of the central turbine 12) that would operate in parallel with a colocated multiplicity of wave energy converting pumps 46.

Clearly, by thus arranging "in parallel" the aforesaid respective sources of wind power and wave power -- and indeed by further arranging in parallel the respective sources of power associated with waves of different wavelength, as has been proposed in U.S. Patent No. 4,279,124 -- one may avail oneself of a practically limitless variety of ways of reducing the fluctuations in overall power output of any sea-based windfarm such as the presently contemplated one with a 500-megawatt rating.

As a matter of fact, in light of the immediately foregoing considerations, it is essentially meaningless to speak of the separate power ratings of the wind energy and wave energy extracting subsystems of any particular embodiment of the present invention such as that which became a specific subject of discussion on page 16 above, and concerning which it was there stated that "about 2 megawatts might be attributable to wind action alone, and the remaining 3 megawatts to wave action alone."

For consider what meaning, if any, might be attached, for example, to the separate power rating of "that full complement of neutrally buoyant outermost impellers 50" which are discussed above, and are there characterized as responding resonantly to waves of wavelength about 100m (300 feet). To be sure, in the presence of a single progressive sinusoidal wave train of wavelength 100m (300 feet), a "full complement" of impellers 50 -- if totally submerged to a minimal depth below the ocean surface -- would already be separately subject (when in deep water) to a total incident wave power of about 4 megawatts if the wave height were 1.5m, (5 feet), of about 16 megawatts if the wave height were 3m (10 feet), of somewhat less than 36 megawatts if the wave height were 4.5m (15 feet), and so on until, at some critical wave height that is not determinable by conventional first-order theory, a maximum total incident wave power would ultimately be reached.
From an inspection of Fig. 1, it will be seen that, under normal operating conditions, every impeller 50 is totally submerged to a predetermined depth below the ocean surface which is substantially greater than its corresponding "minimal depth" of total submergence. Here, it should be further pointed out that, as has been generally proposed in U.S. Patent No. 4,279,124, the particular embodiment of the present invention now under discussion would likewise be capable of varying its depth of submergence -- in the present case, over a range of perhaps 9 to 12m (30 to 40 feet).

On the other hand, the same "full complement" of impellers 50 -- if totally submerged in deep water to a depth of about 10m (33 feet) below the ocean surface -- would be subject to a total incident wave power of just about 1 megawatt if the surface wave height were 1.5m (5 feet), of about 4 megawatts if the surface wave height were 3m (10 feet), and of somewhat less than 9 megawatts if the surface wave height were 4.5m (15 feet). And, at intermediaire depths, each of the corresponding three total incident wave powers would be an exponentially decreasing function of depth.

Thus, what has just been described in terms of "that full complement of neutrally buoyant outermost impellers 50" is but one of many instances of an entirely new kind of flexibility with which the aforesaid 500-megawatt sea-based windfarm can be endowed, but the aforesaid 20-megawatt land-based windfarm obviously cannot: namely, a flexibility in adjusting the separate power ratings of various subsets of differently resonating impellers in such a way as to minimize overall output power fluctuations in the presence of any one of an extremely wide variety of combinations of ambient wave and wind action. Moreover, as has just been seen, this flexibility will have been made possible simply by providing each of the 100 individual 5-megawatt seagoing wind-waveconverters comprising the aforesaid 500-megawatt sea-based windfarm with an appropriate capability of varying its depth of submergence.

Among the aforesaid combinations of ambient wave and wind action, there are two ranges of such combinations that deserve special attention here: a low-wind range, which would involve wind speeds (in the presence of any ambient sea state) so low that every component Inverted Eggbeater 101 of the aforesaid 500-megawatt sea-based windfarm would be at a standstill; and a high-wind range, which would involve wind speeds (again in the presence of any ambient sea state) so high that a complete cutout of every such component Inverted Eggbeater 101 would be required.

Of course, as has already been indicated on page 22 above, for each of the aforesaid component Inverted Eggbeaters 101, the critical wind speed below which standstill will take place would be lower, and the critical wind speed above which complete cutout will be necessary would be far higher, than for any land-based wind energy generator of comparable dimensions. Moreover, when further compared with any such land-based wind energy generator which might be located in a nearby coastal area (i.e., an area extending approximately 50 Km (30 miles) inland from a well defined coastline), every such Inverted Eggbeater 101 would demonstrate, throughout its far greater range of operational wind speeds, that its location at sea is, in fact, far superior to the nearby land-bound location of the latter with respect to the wind speeds that simultaneously prevail at the two different sites.

Perhaps what should finally be noted, here, is an aerodynamic property peculiar to vertical-axis wind turbines, and illustrated in Fig. 1, which renders any VAWT -- and, in particular, the presently contemplated component Inverted Eggbeater 101 -- incapable of starting from standstill without some independent means of first getting it spinning in the wind, and thereby providing it with at least the minimal amount of initial angular momentum necessary for it to reach an equilibrium state of rotational motion determined primarily by the prevailing ambient wind speed.

This ancillary problem of starting from standstill finds a most opportune solution when approached in the context of the transition from a land-based to a sea-based VAWT which has already been proposed at the outset of this specification and has been described in some detail on above. For consider once again*,* in the present light, the additional runner 105, whose normally passive function is to be driven by the usually rotating blades 102 of the presently contemplated Inverted Eggbeater 101; and consider, furthermore, the possibility that, conversely, this additional runner 105 might occasionally assume a temporarily active function upon being put into effect to drive the blades 102 of the Inverted Eggbeater 101 in order to start the latter from standstill.

Now this possibility can be tested, in a way that may be easily visualized upon referring to Fig. 1 by imagining the water contained in the interior chamber 6 to be allowed entry into a suitable number of additional conduits 111 via an equal number of additional orifices 112 which, like the orifices 22, would be uniformly dictributed around the cylindrical wall of chamber 6 in a horizontal plane lying below the water surface 7. Unlike the orifices 22, however, these additional orifices 112 may be visualized as being situated above, rather than below, the aforesaid additional runner 105. Furthermore, each of the additional conduits 111 may be visualized as radiating outwardly and downwardly until it meets one or more of the various conduits 18, into the distal segment(s) of which the aforesaid water may flow, under the automatic control of an interposed valve (not shown), during and only during the process of starting the presently contemplated Inverted Eggbeater 101 from standstill.

During this temporary starting process, the foregoing additional conduits 111 would evidently serve -- in much the same way that the various conduits 18 are intended to serve -- as elements of a "pressure transmission subsystem by means of which extracted wave energy is conveyed from a multiplicity of pumps 46 to the central turbine 12. But, more than this, such extracted wave energy would be directly conveyed, during this temporary starting process, not only to the runner of the central turbine 12, but also to the aforesaid "additional runner 105, which would then be in a condition to operate under a temporary working head of water capable of providing the Inverted Eggbeater 101 with enough initial angular momentum to start it from standstill.

Thus, opening the aforesaid interposed valves would make this temporary working head of water immediately available to produce an upward axial flow of water through the additional runner 105; and, upon reaching the level of the aforesaid additional orifices 112, this upward flow would be forced to change direction and become divided into a uniformly distributed set of radially outward flows of water, each of which would then traverse, in succession, the following steps in its radially outward progress: first, a corresponding additional conduit 111 ; next, the distal segment(s) of one or more corresponding conduits 18; and finally, a corresponding set of wave-driven pumps 46.

Now it is here intended that the aforesaid interposed valves should operate in such a manner that, by means of their compound action, they could cause the radially outward flow of water into the distal segments of all conduits 18 to decrease in magnitude wherever it exits from the proximal segments thereof, while simultaneously causing it to increase in magnitude wherever it exits from the additional conduits 111 ; and vice versa.

In this way, therefore, it would become possible -- during, but only during, the temporary starting process -- to establish automatic control over the magnitude (in such units as cubic meters per second) of the upward axial flow of water through the additional runner 105 ; and so it would become possible -- again during, but only during, the temporary starting process -- to impart to the additional runner 105, and thereby also to the wind energy extracting blades 102 of the Inverted Eggbeater 101, whatever amount of wave-produced rotational kinetic energy might be required to start the latter from standstill.

Accordingly, under the automatic control of the aforesaid interposed valves, the additional runner 105 could be made to perform consecutive combinations of wave energy produced turbine action and wind energy produced pump action such that its rotational speed -- and consequently also that of the wind energy extracting blades 102 of the Inverted Eggbeater 101 -- would gradually build up to that critical point at which the aforesaid wave energy produced turbine action could totally cease, while the aforesaid wind energy produced pump action would continue undiminished in the same rotational sense, in response to the prevailing ambient wind action alone.

Clearly, therefore, throughout the immediately preceding transitional phase of gradual monotonic decrease of the aforesaid wave energy produced turbine action leading up to its total cessation, the aforesaid accompanying wind energy produced pump action must have already undergone a sufficiently great compensating increase; and any such compensating increase will, in turn, have taken place only if the prevailing ambient wind speed had at least a certain corresponding minimum value.

In synchronism with this gradual "switching on" of the aforesaid wind energy produced pump action (by means of the above mentioned interposed valves), a resulting gradual increase in water pressure will meanwhile have taken place just above the horizontal plane of rotation of the additional runner 105, while, through a similarly synchronized gradual decrease, the water pressure just below this horizontal plane of rotation will finally have been restored to its normal, minimum possible value.

Consequently, by the time the aforesaid wave energy produced turbine action has been totally "switched off" (again by means of the above mentioned interposed valves), the water surface 7 will have risen above its "normal" level (i.e., the normal operating level as understood in the original context of Fig. 1) by an amount which, in the presence of sufficiently strong wind action, would completely fill the evacuated space at the top of the interior chamber 6 (this space being identifiable in Fig. 1 as the intervening region above the water level 7 and below the dome 8).

Here, the amount by which the water level 7 will actually have risen is determined by the head of water in meters (in feet) that will have already been developed by the aforesaid wind energy produced pump action of the additional runner 105 -- at that critical point at which the aforesaid wave energy produced turbine action could totally cease.

However, even though at that critical point the prevailing ambient wind speed must necessarily have possessed at least the minimum value referred to on above, it can nevertheless happen that that particular wind speed could still be too low to force the resulting upward axial flow of water through the additional runner 105 to proceed onward in the form of a radially outward discharge into the entire body of water surrounding the inboard platform 2, in complete analogy with the outward discharge of water produced by the various pumps 46 via the pipes 25 and outlets 42 that are shown schematically in Fig. 1.

Clearly, moreover, some means of egress for any such radially outward discharge must be provided to begin with; and in the present case, as will become evident from a further inspection of Fig. 2, the required means of egress could best be provided by a suitable number of additional outlets 113 which, like the orifices 22, would be uniformly distributed around the cylindrical wall of the interior chamber 6 in a horizontal plane lying below the interior water surface 7. A preferred location for this common horizontal plane would then be just below the "normal" level of the interior water surface 7 as defined on page 29 above, and just above the top surface of the buoyant, generally doughnut-shaped exterior vessel 4 portrayed in Fig. 1.

Now the "normal" level of the interior water surface 7, as represented schematically in Fig. 1, and as defined above, could readily be adapted to lie about 1m or 1,25m (3 or 4 feet), say, above the exterior surface 5 of the entire body of water surrounding the inboard platform 2. Correspondingly, the level of the aforesaid common horizontal plane could be located below the exterior water surface 5, but only at such a minimal depth that the aforesaid additional outlets 113 would then be totally, yet only marginally, submerged.

Accordingly, under the immediately foregoing "normal" conditions of operation -- or, indeed, whenever the inboard platform 2 happened to be submerged to a greater depth than that shown in Fig. 1 -- opening the aforesaid additional outlets 113 would unite into a single, continuous body of water the theretofore confined body of water lying below the interior water surface 7, on the one hand, and the entire unconfined body of water lying below the exterior water surface 5, on the other.

However, unless the excess of exterior over interior water pressure at the level of the aforesaid common horizontal plane could already have been sufficiently reduced -- or, preferably, reversed -- just prior to the opening of the aforesaid additional outlets 113, an enormous inward flow of water would surge through all of those additional outlets 113 immediately upon their being opened. For, at any such level below the exterior water surface 5, the interior water pressure prevailing within the chamber 6 under the immediately foregoing "normal" conditions of operation would be less, by an amount equivalent to a 9m (30-foot) head of water, than the exterior water pressure prevailing within the immediately adjoining portion of the entire body of water surrounding the inboard platform 2.

Indeed, this relatively considerable head of water would simply not exist but for the fact that, solely through the action of the various pumps 46 in producing a virtually everlasting, massive outward discharge of water through the pipes 25 and outlets 42, the interior water surface 7 would have already been brought down to, and permanently maintained at, a level no more than 1 to 1,3m (3 or 4 feet) above that of the exterior water surface 5 -- provided, of course, that the immediately foregoing "normal" conditions of operation would be in effect; and provided, furthermore, that the pressure within the evacuated space immediately above the interior water surface 7 would meanwhile have always been kept very nearly equal to zero.

The minimum possible pressure within this evacuated space would be water vapor pressure at the prevailing ambient temperature, and thus would be equivalent, on average, to about a 15cm head of water.

In light of the immediately preceding discussion, it will now be evident that, among those conditions which must be met in order to complete the herein proposed process of starting the presently contemplated Inverted Eggbeater 101 from standstill, the foremost is the requirement that, before the aforesaid additional outlets 113 are under any circumstances allowed to be opened, an opposing head of water -- great enough to equilibrate or, preferably, to outweigh the aforementioned 30-foot head of water -- must first have already been developed by the wind energy produced pump action of the aforesaid additional runner 105.

As has been indicated on page 29 above, this latter requirement would already be met whenever the prevailing ambient wind speed was sufficiently high; and, in this event, the resulting excess of interior over exterior water pressure at the level of the aforesaid common horizontal plane would evidently turn out to be a monotonically increasing function of the prevailing ambient wind speed.

Accordingly, if the aforesaid additional outlets 113 were to be opened automatically in response to any specified amount of such excess water pressure, the corresponding interior and exterior water pressures would immediately undergo simultaneous transient changes toward a final common equilibrium value; and these water pressure changes would be accompanied by a sudden onset of outward flow of water through every additional outlet 113 -- an outward flow whose finally unvarying magnitude, soon reached under equilibrium conditions, would likewise turn out to be a monotonically increasing function of the prevailing ambient wind speed.

## Claims

1. A method of calming the high seas by removing wind and wave energy throughout a selected deep water area anywhere on the surface of a large body of water and in practically any sea state, said method comprising the steps of:
providing a clustered plurality of independent submersible seagoing waveconverters, each of said waveconverters comprising a subsurface wave energy removing means (28, 30, 50),
distributing said clustered plurality of waveconverters throughout said selected deep water area,
providing each of said wave energy removing means (28,30,50) with a prearranged wavelength-selective responsiveness to wave induced subsurface water movement, the wavelength-selective responsiveness of said wave energy removing means (28,30,50) being such that, in the presence of practically any prevailing deep water sea state, the wave energy extracting operations of said wave energy removing means (28,30,50) contribute, by virtue of their moderating action upon the overall sea subspectrum, to the overall effect of reducing the ratio of sea height to swell height within said selected deep water area to a substantially small fraction of the ratio of sea height to swell height simultaneously prevailing in the open-sea approaches to said selected deep water area of said large body of water, and
assigning to said independent submersible seagoing waveconverters the additional function of providing a wave stabilized supporting platform (2) for a wind energy removing means (101), thereby automatically converting said wave stabilized independent seagoing waveconverter into a wave stabilized independent seagoing wind-waveconverter comprising a wave energy removing means (28, 30, 50) and a wind energy removing means (101).

2. The method of claim 1, further comprising the steps of:
- exposing said cluster of seagoing wind-waveconverters to combined wind and wave action in said given selected area, and
- converting to useable form (i.e.. electrically produced hydrogen and oxygen) wind energy extracted in said selected area of said large body of water.

3. The method of claim 2 wherein said cluster of seagoing wind-wave-converters in said selected area has a windward side in the presence of violent storm area, including the additional steps of:
- deploying substantially on said windward side of said selected area, a sheltering group of seagoing waveconverters, each of said waveconverters comprising a further wave energy removing means of substantially higher power,
- distributing said sheltering group of waveconverters so as to provide optimum shelter at any given time to said cluster of wind-waveconverters from said storm sea,
- positioning each said waveconverters at that predetermined depth of submergence below the surface of the water at which it will achieve, at that time, the maximum possible rate of correspondingly additional wave energy removal when subjected to the requirement of maintaining platform stability in the then prevailing ambient storm sea state, said predetermined depth of submergence below the surface of the water being a monotonically Increasing function of the violence of said ambient storm sea state,
- performing said requirement of maintaining platform stability in the then prevailing ambient storm sea state by causing a corresponding prearranged wavelength selective responsiveness of the further wave energy removing means to wave induced subsurface water movement to enable the wave energy extracting operations of said further wave energy removing means to reduce the ratio of storm sea height to storm swell height within said selected area of said large body of water by an amount sufficient to afford to said cluster of seagoing wind-waveconverters the required optimum shelter from said violent storm sea, and
- converting to a useable form (i.e. electrically produced hydrogen and oxygen, etc.) additional wave energy extracted by said further wave energy removing means.

4. The method defined in claims 2 or 3 including converting to a useable form (i.e., electrolytically, etc.) wave energy extracted in said selected area of said large body of water.

5. The method defined in claims 2,3 or 4 including the step of concentrating converted wind and wave energy in said useable form (i.e. electrolytically, etc.) from the respective sides of said seagoing wind-waveconverters and from the respective sides of said high power waveconverters to a central wind and wave energy collecting means.

6. A system for calming the high seas by removing wind and wave energy throughout a selected deep water area anywhere on the surface of a large body water and in practically any sea state, through the use of a wave stabilizing means comprising:
a clustered plurality of independent submersible seagoing waveconverters, distributed throughout said selected deep water area, each of said independent submersible seagoing waveconverters comprising a subsurface wave energy removing means (28, 30, 50) and each of said subsurface wave energy removing means (28,30,50) possessing a prearranged wavelength-selective responsiveness to wave induced subsurface water movement, the wavelength-selective responsiveness of said wave energy removing means (28,30,50) being such that, in the presence of practically any prevailing deep water sea state, the wave energy extracting operations of said wave energy removing means contribute, by virtue of their moderating action upon the overall sea subspectrum, to the overall effect of reducing the ratio of sea height to swell height within said selected deep water area to a substantially small fraction of the ratio of sea height to swell height simultaneously prevailing in the open-sea approaches to said deep water are of said large body of water,
wherein said independent submersible seagoing waveconverters is assigned the additional function of providing a wave stabilized supporting platform (2) for a wind energy removing means (101), thereby automatically converting said wave stabilized independent seagoing waveconverter into a wave stabilized independent seagoing wind-waveconverter comprising a wave energy removing means (28, 30, 50) and a wind energy removing means (101).

7. The system of claim 6 for use at sea wherein a plurality of wind energy removing means (101) is deployed above the surface of the selected sea area, and wherein a wave stabilizing means provides shelter from the high seas to said plurality of wind energy removing means sufficient to enable effective wind energy extraction to take place above said selected area, said wave stabilizing means comprising:
- a plurality, of submersible platforms (1,2,3 to 28,30,50) positioned in said selected sea area for supporting, one-to-one, each wind energy removing means, respectively, and
- a plurality of subsurface wave energy removing means (28,30,50) each supported by a submersible platform, respectively, each such subsurface wave energy removing means (28,30,50) having the effect of contributing to an overall reduction of the ratio of sea height to swell height in said selected sea area to a substantially small fraction of the ratio of sea height to swell height simultaneously prevailing outside said selected sea area.

8. The system defined in claim 7, wherein said wave stabilizing means includes at least one independent high power wave converter :(1,2,3,29,30,50) positioned on the windward side of said plurality of wind energy removing means (101).

9. The system defined in claim 7, wherein said wave stabilizing means includes a plurality of independent high power waveconverters (1,2,3,28,30,50), each of which is maneuverable to a coordinatively specifiable position substantially on the windward side of said plurality ofwind energy removing means, said plurality of high power waveconverters being deployed so as to provide massive additional shelter from storm sea sufficient to enable effective wind energy extraction to take place above said selected sea area in the presence of any surrounding storm sea state.

10. The system defined in claim 7, wherein said wave stabilizing means includes means to selectively vary the depth of submergence of said plurality of subsurface wave energy removing means (28,30,50) while at all times maintaining said plurality of wind energy removing means (101) above the surface of said selected sea area.

11. The system defined in claim 7, wherein said wind energy removing means (101) is a vertical axis wind turbine (VAWT), and wherein energy extracted by said subsurface wave energy removing means (28,30,50) is coupled to said vertical axis wind turbine when starting rotation of said vertical axis wind turbine.

## Patentansprüche

1. Verfahren zur Beruhigung von Hochseen durch Entnahme von Wind- und Wellenenergie in einem gewählten Tiefwassergebiet überall auf der Oberfläche von ausgedehnten Wasserkörpern und bei praktisch jedem Seezustand, wobei das Verfahren die folgenden Schritte beinhaltet:
Zur Verfügung stellen einer zusammengefaßten Vielzahl von unabhängigen tauchfähigen seegängigen Wellenkonvertern, wobei jeder dieser Wellenkonverter eine Unterwasserwellenenergieentnahmeeinrichtung (28, 30, 50) umfaßt,
Verteilen dieser zusammengefaßten Vielzahl von Wellenkonvertern in diesem Tiefwassergebiet und
Ausstatten von jedem dieser Wellenenergieentnahmeeinrichtungen (28, 30, 50) mit einer voreingerichteten wellenlängenselektiven Ansprechempfindlichkeit gegenüber welleninduzierter Unterwasserbewegung, wobei die wellenlängenselektive Ansprechempfindlichkeit dieser Wellenenergieentnahmeeinrichtungen (28, 30, 50) so ist, daß bei der Anwesenheit von praktisch jedem aktuell herrschenden Tiefwasserseezustand die Wellenenergieextraktionsoperationen dieser Wellenenergieentnahmeeinrichtungen (28, 30, 50) aufgrund ihrer mildernden Wirkung über das gesamte Unterwasserspektrum mit zu der Gesamtwirkung der Reduzierung des Verhältnisses der Seehöhe zur Dünungshöhe in dem gewählten Tiefwassergebiet zu einem wesentlich kleineren Teil des Verhältnisses von Seehöhe zu Dünungshöhe beitragen, welches gleichzeitig in der offenen See, die das gewählte Tiefwassergebiet des großen Wasserkörpers umgibt, vorherrscht und
Zuordnen zu diesen unabhängigen tauchfähigen seegängigen Wellenkonvertern die zusätzliche Funktion der Zurverfügungstellung einer wellenstabilisierten Tragplattform (2) für eine Windenergieentfernungseinrichtung (101), damit wird dieser wellenstabilisierte unabhängige seegängige Wellenkonverter automatisch in einen wellenstabilisierten unabhängigen seegängigen Wind/Wellenkonverter umgewandelt, welcher eine Wellenenergieentnahmeeinrichtung (28, 30, 50) und eine Windenergieentfernungseinrichtung (101) enthält.

2. Verfahren nach Anspruch 1, welches im weiteren die Schritte enhält:
- Aussetzen dieser Ansammlung von seegängigen Wind/Wellenkonvertern der kombinierten Wind- und Wellenbewegung in diesem gewählten gegebenen Gebiet und
- Umwandeln der Windenergie, welche in diesem gewählten Gebiet dieses großen Wasserkörpers entnommen worden ist, in eine nutzbare Form (d.h. elektrisch produzierter Wasserstoff und Sauerstoff).

3. Verfahren nach Anspruch 2, bei dem diese Ansammlung von seegängigen Wind/Wellenkonvertern in diesem ausgewählten Gebiet in der Anwesenheit eines orkanartigen Sturmgebietes eine Windangriffsfläche hat, wobei die zusätzlichen Schritte beinhaltet sind:
- Aufstellen einer schützenden Gruppe von seegängigen Wellenkonvertern, im wesentlichen auf der Windangriffsseite dieses gewählten Gebietes, wobei jeder dieser Wellenkonverter eine weitere Wellenenergieentnahmeeinrichtung von wesentlich höherer Leistung enthält,
- Verteilen dieser schützenden Gruppe von Wellenkonvertern, so daß ein optimaler Schutz zu jeder Zeit für diese Ansammlung von Wind/Wellenkonvertern bei Sturmseen gegeben ist,
- Positionieren jedes dieser Wellenkonverter auf der vorherbestimmten Tauchtiefe unter der Oberfläche des Wassers, bei der es in dieser Zeit das maximal mögliche Verhältnis von korrespondierender zusätzlicher Wellenenergieentnahme erreicht, wenn es den Anforderungen zur Aufrechterhaltung der Plattformstabilität in der dann vorherrschenden umgebenden Sturmseezustand unterworfen ist, wobei diese vorherbestimmte Tauchtiefe unter der Oberfläche des Wassers eine monoton anwachsende Funktion der Heftigkeit des umgebenden Sturmseezustandes ist,
- Ausbilden dieser Anfordernisse zur Aufrechterhaltung der Plattformstabilität in der dann vorherrschenden umgebenden Sturmseezustand durch Verursachung einer korrespondierenden voreingerichteten wellenlängenselektiven Ansprechempfindlichkeit der weiteren Wellenenergieentnahmeeinrichtung gegenüber welleninduzierter Unterwasserbewegung zum Ermöglichen der Wellenenergieextraktionsoperationen dieser weiteren Wellenenergieentnahmeeinrichtung zur Reduzierung des Verhältnisses von Sturmseenhöhe zur Sturmseedünung in diesem ausgesuchten Gebiet dieses großen Wasserkörpers in einer genügenden Größe, um der Ansammlung von seegängigen Windwellenkonvertern die benötigte optimale Abdeckung gegenüber dieser orkanartigen Sturmsee zu geben, und
- Umformen der zusätzlichen Wellenenergie, welche durch die weiteren Wellenenergieentnahmeeinrichtung entnommen wird, in eine nutzbare Form (d.h. elektrisch produzierter Wasserstoff und Sauerstoff etc.).

4. Verfahren nach Anspruch 2 oder 3, enthaltend die Umwandlung der Wellenenergie, welche in diesem ausgewählten Gebiet dieses ausgedehnten Wasserkörpers entnommen wird, in eine nutzbare Form (d.h. elektrolytisch etc.).

5. Verfahren nach Anspruch 2, 3 oder 4, enthaltend den Schritt, daß umgewandelte Wind- und Wellenenergie in dieser nutzbaren Form (d.h. elektrolytisch etc.) von den jeweiligen Seiten dieser seegängigen Wind/Wellenkonverter und von den jeweiligen Seiten dieser Hochleistungswellenkonverter zu einer zentralen Wind- und Wellenenergiesammeleinrichtung hingebündelt wird.

6. System zur Beruhigung von Hochseen durch Entnahme von Windund Wellenenergie in einem gewählten Tiefwassergebiet überall auf der Oberfläche eines großen Wasserkörpers und bei praktisch jedem Seezustand unter der Nutzung einer Wellenstabilisierungseinrichtung, welche umfasst:
- eine zusammengefaßte Vielzahl von unabhängigen tauchfähigen seegängigen Wellenkonvertern, welche in diesem ausgewählten Tiefwassergebiet verteilt sind, wobei jeder dieser unabhängigen tauchfähigen seegängigen Wellenkonverter eine Unterwasserwellenenergieentnahmeeinrichtung (28, 30, 50) enthält und jede dieser Unterwasserwellenenergieentnahmeeinrichtungen (28, 30, 50) eine voreingerichtete wellenlängenselektive Ansprechempfindlichkeit bezüglich welleninduzierter Unterwasserbewegung besitzt, wobei die wellenlängenselektive Ansprechempfindlichkeit dieser Wellenenergieentnahmeeinrichtung (28, 30, 50) derart ist, daß in der Anwesenheit von praktisch jedem herrschenden Tiefwasserseezustand die Wellenenergieextraktionsoperationen dieser Wellenenergieentnahmeeinrichtung aufgrund ihrer beruhigenden Wirkung auf das gesamte Unterwasserspektrum bei dem Gesamteffekt der Reduzierung des Verhältnisses von Seehöhe zur Dünungshöhe in dem ausgewählten Tiefwassergebiet zu einem wesentlich kleineren Teil des Verhältnisses der Seehöhe zur Dünungshöhe mitwirken, welches gleichzeitig in der offenen See herrscht und sich diesem Tiefwassergebiet dieses großen Wasserkörpers annähert,
wobei diese unabhängigen tauchfähigen seegängigen Wellenkonverter die zusätzliche Funktion besitzen, eine wellenstabilisierte Trägerplattform (2) für eine Windenergieentnahmeeinrichtung (101) zur Verfügung zu stellen, dabei wird automatisch dieser wellenstabilisierte unabhängige seegängige Wellenkonverter in einen wellenstabilisierten unabhängigen seegängigen Wind/Wellenkonverter umgewandelt, der eine Wellenenergieentnahme-einrichtung (28, 30, 50) und eine Windenergieentnahmeeinrichtung (101) enthält.

7. System nach Anspruch 6 zur Nutzung auf See, bei dem eine Mehrzahl von Windenergieentnahmeeinrichtungen (101) auf der Oberfläche des ausgewählten Seegebietes aufgestellt sind und bei der eine Wellenstabilisierungseinrichtung genügend Schutz vor Hochseen für diese Mehrzahl von Windenergieentnahmeeinrichtungen aufbietet, um eine effektive Windenergieextraktion zu ermöglichen, die über dem ausgewählten Gebiet stattfindet, wobei die Wellenstabilisierungseinrichtung umfaßt:
- eine Vielzahl von tauchfähigen Plattformen (1, 2, 3 bis 28, 30, 50), welche in diesem ausgewählten Seegebiet zum Tragen jeder Windenergieentnahmeeinrichtung gemäß 1 : 1 positioniert sind und
- eine Vielzahl von Unterwasserwellenenergieentnahmeeinrichtungen (28, 30, 50), wobei jede entsprechend von einer tauchfähigen Plattform getragen ist bzw. jede dieser Unterwasserwellenenergieentnahmeeinrichtungen (28, 30, 50) die Wirkung besitzt, zu einer gesamten Reduzierung des Verhältnisses von Seehöhe zur Dünungshöhe in diesem ausgewählten Seegebiet zu einem beträchtlich kleineren Teil des Verhältnisses von Seehöhe zu Dünungshöhe beizutragen, welche gleichzeitig auswärts dieses gewählten Seegebietes herrscht.

8. System nach Anspruch 7, bei dem die Wellenstabilisierungseinrichtung mindestens einen unabhängigen Hochleistungswellenkonverter (1, 2, 3, 28, 30, 50) enthält, welcher auf der Windangriffsseite dieser Vielzahl von Windenergieentnahmeeinrichtungen (101) angebracht ist.

9. System nach Anspruch 7, wobei die Wellenstabilisierungseinrichtung eine Vielzahl von unabhängigen Hochleistungswellenkonvertern (1, 2, 3, 28, 30, 50) umfaßt, jeder von diesen zu einer durch Koordinaten spezifizierten Position, im wesentlichen auf der Windangriffsseite dieser Vielzahl von Windenergieentnahmeeinrichtungen, manövrierbar ist, und wobei diese Vielzahl von Hochleistungswellenkonvertern so angeordnet ist, daß sie einen massiven zusätzlichen Schutz gegenüber Sturmseen schafft, der ausreichend ist, um eine effektive Windenergieextraktion zu ermöglichen, die in dem gewählten Seegebiet bei Anwesenheit jedmöglichen umgebenden Sturmseezustandes stattfindet.

10. System nach Anspruch 7, bei dem die Wellenstabilisierungseinrichtung eine Einrichtung zum selektiven Variieren der Tauchtiefe der Vielzahl von Unterwasserwellenenergieentnahmeeinrichtungen (28, 30, 50) einschließt, während zu allen Zeiten diese Vielzahl von Windenergieentnahmeeinrichtungen (101) über der Oberfläche des ausgewählten Seegebietes verbleibt.

11. System nach Anspruch 7, wobei die Windenergieentnahmeeinrichtung (101) eine Vertikalachsenwindturbine (VAWT) ist und wobei die Energie, welche durch die Unterwasserwellenenergieentnahmeeinrichtung (28, 30, 50) entnommen wird, mit der Vertikalachsenwindturbine gekoppelt ist, wenn die Umdrehung dieser Vertikalachsenwindturbine beginnt.

## Revendications

1. Procédé pour calmer les mers fortes en récupérant l'énergie du vent et des vagues sur l'ensemble d'une zone choisie en eau profonde n'importe où à la surface d'une grande masse d'eau et, en pratique, tout état de la mer, ledit procédé comportant les étapes consistant à :
fournir plusieurs convertisseurs de vagues, allant en mer, submersibles, indépendants, réunis en faisceau, chacun desdits convertisseurs de vagues comportant des moyens pour récupérer l'énergie des vagues sous la surface (28, 30, 50),
répartir lesdits plusieurs convertisseurs de vagues réunis en faisceau sur la totalité de ladite zone choisie en eau profonde,
donner à chacun desdits moyens pour récupérer l'énergie des vagues (28, 30, 50) une capacité de réponse préétablie, sélective, fonction de la longueur d'onde, au mouvement de l'eau induit par les vagues sous la surface, la capacité de réponse, sélective*,* fonction de la longueur d'onde, desdits moyens pour récupérer l'énergie des vagues (28, 30, 50) étant telle qu'en présence de pratiquement tout état de mer dominant, en eau profonde, les opérations d'extraction de l'énergie des vagues par lesdits moyens pour récupérer l'énergie des vagues (28, 30, 50) contribuent, en vertu de leur action modératrice sur l'ensemble du sous-spectre de la mer, à un effet global de réduction du rapport de la hauteur de la mer sur la hauteur de la houle, à l'intérieur de ladite zone choisie en eau profonde, jusqu'à une fraction très petite du rapport de la hauteur de la mer sur la hauteur de la houle qui prédomine de manière simultanée, en pleine mer, aux alentours de ladite zone choisie un eau profonde de ladite grande masse d'eau et,
assigner auxdits convertisseurs de vagues, allant en mer, submersibles, indépendants, la fonction supplémentaire de fournir une plate-forme (2), stabilisée vis à vis des vagues, de support des moyens (101) de récupération de l'énergie du vent, en convertissant ainsi de manière automatique lesdits convertisseurs de vagues, allant en mer, indépendants, stabilisés vis à vis des vagues, en convertisseurs de vagues/vent allant en mer, indépendants, stabilisés vis à vis des vagues comportant des moyens pour récupérer l'énergie des vagues (28, 30, 50) et des moyens pour récupérer l'énergie du vent (101).

2. Procédé selon la revendication 1, comportant de plus les étapes consistant à :
exposer ledit faisceau de convertisseurs de vagues/vent allant en mer à l'action combinée du vent et des vagues dans ladite zone choisie donnée, et
convertir sous une forme utilisable (c'est-à-dire en hydrogène et en oxygène produits électriquement) l'énergie au vent, extraite dans ladite zone choisie de ladite grande masse d'eau.

3. Procédé selon la revendication 2, dans lequel ledit faisceau desdits convertisseurs de vagues/vent, allant en mer, dans ladite zone choisie, a un côté au vent, en présence d'une zone d'orage violent, comportant les étapes consistant à :
déployer pratiquement sur ledit côté au vent de ladite zone choisie, un groupe de protection des convertisseurs de vagues, allant en mer, chacun desdits convertisseurs de vagues comportant d'autres moyens pour récupérer l'énergie des vagues ayant une puissance nettement plus élevée,
- répartir ledit groupe de protection constitué des convertisseurs de vagues de manière à fournir une protection optimale, à tout moment, dudit faisceau de convertisseurs de vagues/vent vis à vis de ladite mer déchainée,
- positionner chacun desdits convertisseurs de vagues à la profondeur d'immersion prédéterminée en dessous de la surface de l'eau au niveau de laquelle on obtient, à ce moment, le taux maximal possible de récupération de l'énergie des vagues, supplémentaire, correspondante, lorsqu'ils sont soumis à la nécessité de maintenir la stabilité de la plate-forme dans l'état ambiant de mer déchainée qui prédomine alors, ladite profondeur prédéterminée d'immersion en dessous de la surface de l'eau étant une fonction croissante monotone de la violence dudit état ambiant de mer déchainée,
- satisfaire à ladite nécessité de maintenir la stabilité de la plate-forme dans l'état ambiant de mer déchainée qui prédomine alors, en entraînant une capacité de réponse sélective fonction de la longueur d'onde, préétablie, correspondante, que présentent les autres moyens pour récupérer l'énergie des vagues, au mouvement de l'eau induit par les vagues en dessous de la surface de manière à permettre les opérations d'extraction de l'énergie des vagues par lesdits autres moyens pour récupérer l'énergie des vagues pour réduire le rapport de la hauteur de la mer déchaînée sur la hauteur de la houle déchaînée, à l'intérieur de ladite zone choisie de ladite grande masse d'eau, d'une quantité suffisante pour offrir audit faisceau de convertisseurs de vagues/vent, allant en mer, la protection optimale requise vis à vis de ladite mer déchaînée, violente, et
- convertir sous une forme utilisable (c'est-à-dire en hydrogène et en oxygène produits électriquement, etc.) l'énergie supplémentaire des vagues extraite par lesdits autres moyens pour récupérer l'énergie des vagues.

4. Procédé selon la revendication 2 ou 3 comportant la conversion sous une forme utilisable (c'est-à-dire électrolytiquement, etc.) de l'énergie de vagues extraite dans ladite zone choisie de ladite grande masse d'eau.

5. Procédé défini dans les revendications 2, 3 ou 4, comportant l'étape consistant à concentrer l'énergie du vent et des vagues convertie sous ladite forme utilisable (c'est-à-dire électrolytiquement, etc.) à partir des côtés respectifs desdits convertisseurs de vagues/vent, allant en mer, et à partir des côtés respectifs desdits convertisseurs de vagues à puissance élevée, sur des moyens centraux collectant l'énergie du vent et des vagues.

6. Système pour calmer les mers fortes en récupérant l'énergie du vent et des vagues sur l'ensemble d'une zone choisie en eau profonde n'importe où à la surface d'une grande masse d'eau et, en pratique, tout état de la mer, par l'utilisation de moyens de stabilisation des vagues, comportant :
plusieurs convertisseurs de vagues, allant en mer, submersibles, indépendants, réunis en faisceau, répartis sur l'ensemble de ladite zone choisie en eau profonde, chacun desdits convertisseurs de vagues, allant en mer, submersibles, indépendants, comportant des moyens pour récupérer l'énergie des vagues sous la surface (28, 30, 50) et chacun desdits moyens pour récupérer l'énergie des vagues sous la surface (28, 30, 50) possédant une capacité de réponse, sélective, fonction de la longueur d'onde, préétablie, au mouvement de l'eau induit par les vagues sous la surface, la capacité de réponse sélective, fonction de la longueur d'onde, desdits moyens pour récupérer l'énergie des vagues (28, 30, 50) étant telle qu'on prèsente de pratiquement tout état de mer, dominant en eau profonde, les opérations d'extraction de l'énergie des vagues par lesdits moyens pour récupérer l'énergie des vagues contribuent, on vertu de leur action modératrice sur l'ensemble du sous-spectre de la mer, à un effet global de réduction du rapport de la hauteur de la mer sur la hauteur de la houle à l'intérieur de ladite zone choisie en eau profonde, jusqu'à une fraction très petite du rapport de la hauteur de la mer sur la hauteur de la houle qui prédomine de manière simultanée, en pleine mer aux environs de ladite zone en eau profonde de ladite grande masse d'eau,
dans lequel lesdits convertisseurs de vagues, allant en mer, submersibles, indépendants, reçoivent la fonction supplémentaire de fournir une plate-forme (2), stabilisée vis à vis des vagues, de support des moyens pour récupérer l'énergie du vent (101), en convertissant par conséquent de manière automatique lesdits convertisseurs de vagues, allant en mer, indépendants, stabilisés, vis à vis des vagues en convertisseurs de vagues/vent, allant en mer, indépendants, stabilisés vis à vis des vagues, comportant des moyens pour récupérer l'énergie des vagues (28, 30, 50) et des moyens pour récupérer l'énergie du vent (101).

7. Système selon la revendication 6 destiné à étre utilisé en mer, dans lequel plusieurs moyens pour récupérer l'énergie du vent (101) sont déployés au-dessus de la surface de la zone de mer choisie, et dans lequel des moyens de stabilisation vis à vis des vagues fournissent une protection, vis a vis des mers fortes, auxdits plusieurs moyens pour récupérer l'énergie du vent, qui est suffisante pour permettre une extraction efficace de l'énergie du vent au-dessus de ladite zone choisie, lesdits moyens de stabilisation vis à vis des vagues comportant :
- plusieurs plates-formes submersibles (1, 2, 3 à 28, 30, 50), positionnées dans ladite zone de mer choisie, destinées à supporter, individuellement, chacun des moyens pour récupérer l'énergie du vent, respectivement, et
- plusieurs moyens pour récupérer l'énergie des vagues sous la surface (28, 30, 50), supportés chacun par une plate-forme submersible, respectivement, chacun de tels moyens pour récupérer l'énergie des vagues sous la surface (28, 30, 50) ayant pour effet de contribuer à la réduction globale au rapport de la hauteur de la mer sur la hauteur de la houle dans ladite zone de mer choisie, jusqu'à une fraction très petite du rapport de la hauteur de la mer sur la hauteur de la houle qui prédomine simultanément à l'extérieur de ladite zone de mer choisie.

8. Système défini dans la revendication 7, dans lequel lesdits moyens de stabilisation vis à vis des vagues comportent au moins un convertisseur de vagues indépendant, à puissance élevée (1, 2, 3, 28, 30, 50) positionné du côté au vent desdits plusieurs moyens pour récupérer l'énergie du vent (101).

9. Système défini dans la revendication 7, dans lequel lesdits moyens de stabilisation vis à vis des vagues comportent plusieurs convertisseurs de vagues indépendants, à puissance élevée (1, 2, 3, 28, 30, 50), chacun pouvant être déplacé vers une position spécifiable par des coordonnées, pratiquement sur le côté au vent desdits plusieurs moyens pour récupérer l'énergie du vent, lesdits plusieurs convertisseurs de vagues à puissance élevée étant déployés de maniére à fournir une protection supplémentaire massive vis à vis d'une mer déchaînée, qui est suffisante pour permettre une extraction efficace de l'énergie du vent au-dessus de ladite zone de mer choisie, en présence d'un état quelconque de mer environnante déchaînée.

10. Système défini dans la revendication 7, dans lequel lesdits moyens de stabilisation vis à vis des vagues comportant des moyens pour faire varier de manière sélective la profondeur d'immersion desdits plusieurs moyens pour récupérer l'énergie des vagues sous la surface (28, 30, 50), tout en maintenant à chaque instant lesdits plusieurs moyens pour récupérer l'énergie du vent (101) au-dessus de la surface de ladite zone de mer choisie.

11. Système défini dans la revendication 7, dans lequel lesdits moyens pour récupérer l'énergie du vent (101) sont une turbine eolienne à axe vertical (VAWT), et dans lequel l'énergie extraite par lesdits moyens pour récupérer l'énergie des vagues sous la surface (28, 30, 50) sont couplés à ladite turbine éolienne à axe vertical lors de la mise en rotation de ladite turbine éolienne à axe vertical.
